# FASCICULE DE BREVET EUROPEEN

(11) **EP 2 211 406 B1**
(45) Date de publication et mention de la délivrance du brevet: **30.05.2012**
(21) Numéro de dépôt: 09171589.6
(22) Date de dépôt: 29.09.2009
(51) Int. Cl.: H01M 4/86, H01M 8/02, H01M 8/10

(54) **Electrode de pile à combustible**
Elektrode für Brennstoffzelle
Fuel cell electrode

(30) Priorité: 15.01.2009 FR 0950211
(43) Date de publication de la demande: 28.07.2010
(73) Titulaire: STMicroelectronics (Tours) SAS, 37100 Tours (FR)
(72) Inventeur: Karst, Nicolas, 57600, Folkling (FR)
(74) Mandataire: de Beaumont, Michel

(56) Documents cités:
- FR-A- 2 895 573
- US-A1- 2004 072 057
- US-A1- 2004 081 878
- US-A1- 2007 202 378

## Description

### Domaine de l'invention

La présente invention concerne les piles à combustible et en particulier les piles à combustible à hydrogène et oxygène et concerne plus particulièrement la structure d'électrode de telles piles.

### Exposé de l'art antérieur

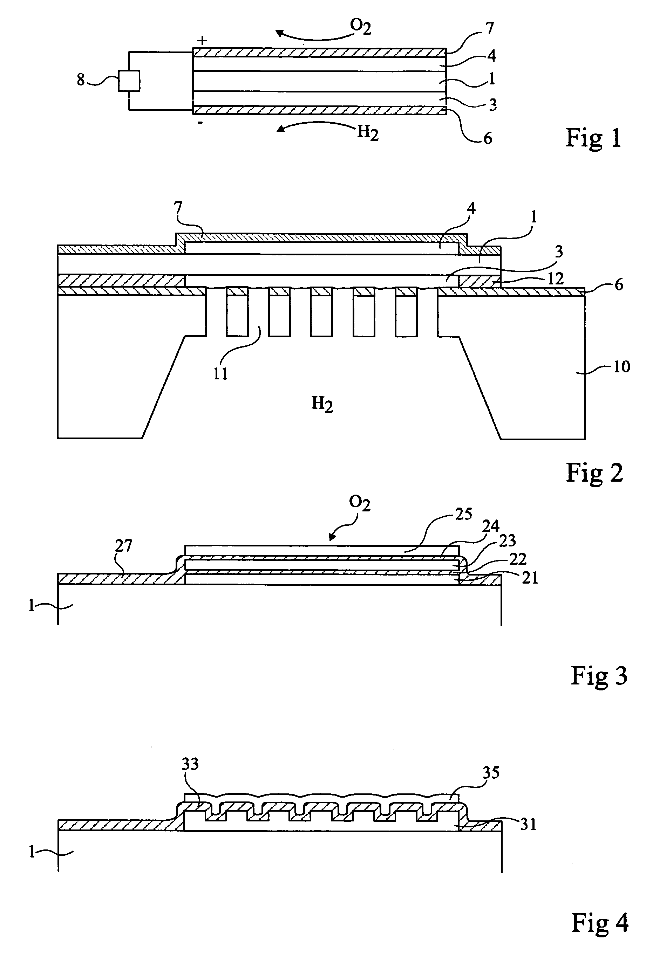

Comme l'illustre la figure 1, une pile à combustible à hydrogène-oxygène comprend une couche ou feuille d'un électrolyte 1 prise en sandwich entre deux couches ou feuilles de catalyseurs 3 et 4 revêtus de couches conductrices 6 et 7 destinées à la prise de contact. La face supérieure de la pile est en contact avec de l'oxygène, par exemple de l'air, et la face inférieure de la pile est en contact avec de l'hydrogène.

Dans ces conditions, quand la pile est connectée à une charge 8, il apparaît une tension positive du côté de la face supérieure ou cathode et une tension négative du côté de la face inférieure ou anode et un courant circule dans la charge. Du côté anode, le catalyseur transforme des molécules d'hydrogène gazeux en deux protons et deux électrons, les protons se déplacent à partir de la couche de catalyseur d'anode à travers la couche d'électrolyte vers la couche de catalyseur de cathode où se produit la réaction 2H⁺+½O₂+2e⁻ → H₂0, les deux électrons circulant à travers la charge.

De façon courante, l'électrolyte 1 est du Nafion et le catalyseur 3, 7 est en un mélange de carbone platine, comprenant par exemple quelques pourcents de platine, et contient de préférence une certaine quantité de Nafion, par exemple 20 à 40 %.

Les conducteurs 6 et 7 sont par exemple des couches d'or très minces pour à la fois être conductrices et être perméables à l'hydrogène ou à l'oxygène. Les conducteurs 6 et 7 peuvent aussi être constitués de grilles d'or. Dans le cas où les conducteurs 6 et 7 sont des couches d'or, très minces, par exemple d'une épaisseur inférieure à 1 µm, pour être suffisamment perméables au gaz, elles ne sont pas très bonnes conductrices car les couches de catalyseur sont des couches poreuses et les couches d'or ne forment pas des surfaces planes régulières mais se déposent de façon discontinue en pénétrant dans les pores du catalyseur. Il se pose donc un problème de résistance de contact (ou de collecte de courant). Dans le cas où les conducteurs 6 et 7 constituent une grille d'or dont les mailles ont une épaisseur de 2 à 3 µm, un inconvénient évident est que, sous les parties pleines de la grille, le gaz ne peut pas réagir avec le catalyseur sous-jacent.

Un autre paramètre qui nuit à une collecte satisfaisante du courant est que le matériau du catalyseur, comme on l'a indiqué précédemment, est de préférence un mélange de carbone platine et d'électrolyte (par exemple du Nafion). La présence du Nafion dans les couches de catalyseur favorise le bon fonctionnement de la pile mais le Nafion étant un bon conducteur protonique mais un mauvais conducteur d'électrons, ceci augmente la résistance interne de la pile. Il en résulte que l'on est amené à réduire la proportion de Nafion dans le catalyseur, ce qui nuit à l'efficacité de ce catalyseur. En effet, lorsqu'on réduit la quantité de Nafion dans l'électrode on réduit la conduction protonique dans le volume de l'électrode et donc la quantité de protons échangés.

La figure 2 représente un exemple de réalisation d'une cellule de pile à combustible à hydrogène et oxygène. La pile est formée à partir d'un support constitué d'une portion d'une plaquette de silicium 10, de préférence amincie dans la partie où elle porte la cellule de pile proprement dite. Dans cette partie amincie, la plaquette 10 est percée d'ouvertures 11 permettant le passage d'hydrogène. On comprendra que, d'une façon générale, toutes les surfaces de la plaquette sont revêtues d'un isolant constitué au moins d'oxyde de silicium natif. Une zone active de pile est délimitée, sensiblement au-dessus de la région amincie comportant les ouvertures par une couche d'isolant 12, par exemple une couche d'oxyde de silicium. A l'intérieur de l'ouverture ménagée dans la couche 12, on forme par tout moyen, par exemple par dépôt au jet d'encre, une couche 3 de catalyseur. Une couche de Nafion 1 est déposée, par exemple à la tournette et est recouverte d'une deuxième couche de catalyseur 4. Au préalable, sur la surface du support 10 a été formé une couche d'or d'anode 6, ayant par exemple une épaisseur de l'ordre du micromètre. Sur la surface supérieure de la structure est formée une couche d'or de cathode 7 ayant par exemple une épaisseur de l'ordre du demi micromètre. Ce qui précède ne constitue qu'un exemple de possibilité de réalisation d'une pile à combustible à hydrogène-oxygène, cette réalisation présentant l'avantage d'utiliser pour le support des technologies bien connues dans le domaine de la fabrication des composants à base de silicium. Dans une telle structure, le problème du contact entre la couche conductrice d'anode 6 et la couche de catalyseur 3 ne pose pas de grave problème, mais la qualité du contact entre la couche d'or mince de cathode 7 et la couche de catalyseur 4 sont difficiles à résoudre si, comme on l'a indiqué précédemment, on veut à la fois obtenir une bonne collecte des porteurs de charge et une bonne "transparence" de la couche pour une bonne diffusion de l'oxygène dans la couche de catalyseur 4. De façon courante, la surface utile de la cellule de pile à combustible a une surface utile de 1 à 3 cm².

Une structure de pile à combustible du type ci-dessus est décrite dans le document US 2004/072057 A1.

### Résumé de l'invention

Un mode de réalisation de la présente invention vise à résoudre au moins certains des problèmes des électrodes de contact de pile à combustible de l'art antérieur.

Un mode de réalisation de la présente invention vise à prévoir une nouvelle structure d'électrode de pile à combustible à hydrogène-oxygène permettant d'améliorer la collecte d'électrons.

Pour atteindre ces objets ainsi que d'autres, un mode de réalisation de la présente invention prévoit une pile à combustible à hydrogène-oxygène comprenant un électrolyte pris en sandwich entre deux couches ou feuilles de catalyseur, chaque couche ou feuille de catalyseur étant en contact avec une électrode poreuse, dans laquelle une ou plusieurs couches ou feuilles de catalyseur et une ou plusieurs couches ou feuilles d'électrodes s'interpénètrent selon la revendication 1.

Selon un mode de réalisation de la présente invention, la pile à combustible comprend une alternance de couches de catalyseur et de couches d'électrode, les couches d'électrode étant interconnectées.

Selon un mode de réalisation de la présente invention, l'électrode serpente à l'intérieur du volume du catalyseur, en une forme gaufrée ou ondulée.

Selon un mode de réalisation de la présente invention, la couche d'électrode poreuse est une couche d'un matériau conducteur d'une épaisseur inférieure à 1 µm, de préférence de l'ordre de 0,2 à 0,6 µm.

Selon un mode de réalisation de la présente invention, la ou les couches d'électrodes poreuses est ou sont une ou des grilles d'un matériau conducteur.

Selon un mode de réalisation de la présente invention, le matériau conducteur est de l'or.

### Brève description des dessins

Ces objets, caractéristiques et avantages, ainsi que d'autres seront exposés en détail dans la description suivante de modes de réalisation.particuliers faite à titre non-limitatif en relation avec les figures jointes parmi lesquelles :
La figure 1 est une vue en coupe illustrant très schématiquement une structure de pile à combustible ;
la figure 2 est une vue en coupe illustrant un exemple de réalisation de pile à combustible ;
la figure 3 est une vue en coupe d'une structure d'électrode de pile à combustible selon un mode de réalisation de la présente invention ; et
la figure 4 est une vue en coupe d'une structure d'électrode de pile à combustible selon un autre mode de réalisation de la présente invention.

### Description détaillée

La figure 3 représente de façon agrandie la partie supérieure d'un électrolyte 1 de pile à combustible à hydrogène-oxygène. Il pourra s'agir d'une feuille d'électrolyte ou d'une couche déposée. La description ci-après sera donnée dans le cas d'une couche d'électrolyte sur laquelle sont déposées des couches de catalyseur et d'électrode. Ceci ne doit pas être considéré comme limitatif et l'invention couvre le cas où l'électrolyte est une feuille sur laquelle sont déposées des couches de catalyseur et d'électrode, le cas où l'électrolyte est une feuille à laquelle sont accolées des feuilles de catalyseur et/ou d'électrode, et des combinaisons de ces divers cas.

En figure 3, sur une couche d'électrolyte 1 est déposé, par exemple par projection de type jet d'encre, une couche 21 d'un mélange de matériau formant catalyseur, comprenant par exemple principalement de la poudre de carbone, du platine et un pourcentage d'électrolyte, par exemple du Nafion. Sur la couche de catalyseur 21 est déposée, par exemple par pulvérisation, une couche d'or très mince 22. Après quoi sont formées une deuxième couche de catalyseur 23, une deuxième couche d'or très mince 24 et une couche de catalyseur finale 25. Les deux couches d'or 22 et 24 se superposent à la périphérie pour former une couche d'or plus épaisse 27 sur laquelle peut être pris un contact.

Avec cette structure, l'oxygène arrivant du côté de la face supérieure réagit bien avec la couche de catalyseur 25 et peut traverser les couches d'or très minces 24 et 22 pour réagir également avec les couches de catalyseur 23 et 21. Les couches d'or très minces peuvent avoir une épaisseur de l'ordre de quelques dixièmes de µm, par exemple 0,2 à 0,6 µm, de préférence de l'ordre de 0,3 µm. D'autre part, étant donné l'interpénétration entre les couches conductrices et les couches de catalyseur, ces couches de catalyseur peuvent être plus résistantes sans nuire à la qualité de collecte du courant et à la résistance interne de la cellule. Ainsi, ces couches de catalyseur peuvent contenir plus de Nafion que cela n'est usuel, et au lieu de contenir de 20 à 40 % de Nafion, elles peuvent par exemple contenir de l'ordre de 35 à 45 % de Nafion, ce qui favorise la réaction entre l'oxygène, les protons et les électrons et augmente la quantité de courant que peut fournir la pile pour une tension donnée.

Toute autre structure dans laquelle des couches conductrices interpénètrent des couches de catalyseur est envisagée par la présente invention. Par exemple, dans le cas de l'exemple de la figure 3, au lieu de couches d'or très minces, on pourra prévoir une ou plusieurs grilles d'or d'une épaisseur de 2 à 5 µm ou de tout autre matériau conducteur compatible avec une prise de contact sur ou dans la couche de catalyseur.

La figure 4 représente un exemple de réalisation de la présente invention dans lequel, au-dessus de la couche d'électrolyte 1, est formée une première couche de catalyseur 31 ayant une surface supérieure irrégulière, de sorte qu'une couche d'or 33 déposée ensuite a une forme irrégulière, par exemple la forme gaufrée ou ondulée illustrée. Cette couche d'or est ensuite revêtue d'une deuxième couche de catalyseur 35. Avec une telle structure, on obtient le même type d'avantages que ceux décrits en relation avec la figure 3. On notera que plusieurs épaisseurs de couches d'or à surface ondulée telle que la couche 33 peuvent alterner avec des couches de catalyseur. A nouveau dans ce mode de réalisation, la ou les couches d'or peuvent être remplacées par des grilles d'or.

La présente invention a été décrite plus particulièrement en relation avec des modes de réalisation concernant une réalisation particulière de pile à combustible dans laquelle divers matériaux sont déposés par couches successives. L'invention s'applique également au cas où la pile est formée à partir de feuilles des divers matériaux accolées et par exemple assemblées sous pression.

De même, la présente invention a été décrite dans le cadre d'un mode de réalisation particulier où une structure d'électrode particulière est utilisée pour le contact avec le catalyseur de cathode. L'invention pourra de même être mise en oeuvre en relation également avec la couche d'anode, ou seulement avec celle-ci dans certaines réalisations particulières.

Divers modes de réalisation avec diverses variantes ont été décrits ci-dessus. L'homme de l'art pourra combiner divers éléments de ces divers modes de réalisation et variantes sans faire preuve d'activité inventive. De plus, des matériaux autres que du Nafion pourront être utilisés pour l'électrolyte et des matériaux autres que du carbone/platine pourront être utilisés pour le catalyseur, par exemple du carbone/platine-cobalt ou du carbone/platine-nickel.

## Revendications

1. Pile à combustible à hydrogène-oxygène comprenant un électrolyte (1) pris en sandwich entre deux couches ou feuilles de catalyseur (21 ; 31), chaque couche ou feuille de catalyseur étant en contact avec une électrode perméable au gaz (27 ; 33) et en un matériau conducteur, dans laquelle une ou plusieurs couches ou feuilles d'électrodes (22, 24 ; 33) sont disposées à l'intérieur d'une ou plusieurs couches ou feuilles de catalyseur (21, 23, 25 ; 31, 35).

2. Pile à combustible selon la revendication 1, comprenant une alternance de couches de catalyseur (21, 23, 25) et de couches d'électrode (22, 24), les couches d'électrode étant interconnectées.

3. Pile à combustible selon la revendication 1, dans laquelle l'électrode (33) serpente à l'intérieur du volume du catalyseur (31, 35), en une forme gaufrée ou ondulée.

4. Pile à combustible selon l'une quelconque des revendications 1 à 3, dans laquelle la couche d'électrode perméable au gaz est une couche d'un matériau conducteur d'une épaisseur inférieure à 1 µm, de préférence de l'ordre de 0,2 à 0,6 µm.

5. Pile à combustible selon l'une quelconque des revendications 1 à 3, dans laquelle la ou les couches d'électrodes perméables au gaz est ou sont une ou des grilles d'un matériau conducteur.

6. Pile à combustible selon la revendication 4 ou 5, dans laquelle le matériau conducteur est de l'or.

## Claims

1. A hydrogen-oxygen fuel cell comprising an electrolyte (1) sandwiched between two catalyst layers or sheets (21; 31), each catalyst layer or sheet being in contact with an electrode (27; 33), permeable to gas and of a conductive material, wherein one or several electrode layers or sheets (22, 24; 33) are disposed inside one or several catalyst layers or sheets (21, 23, 25; 31 35).

2. The fuel cell of claim 1, comprising an alternation of catalyst layers (21, 23, 25) and of electrode layers (22, 24), the electrode layers being interconnected.

3. The fuel cell of claim 1, wherein the electrode (33) snakes across the catalyst bulk (31, 35), with a corrugated or rippled shape.

4. The fuel cell of any of claims 1 to 3, wherein the electrode layer permeable to gas is a layer of a conductive material of a thickness smaller than 1 µm, preferably in the order of 0.2 to 0.6 µm.

5. The fuel cell of any of claims 1 to 3, wherein the electrode layer(s) permeable to gas is (are) a grid(s) of a conductive material.

6. The fuel cell of claim 4 or 5, wherein the conductive material is gold.

## Patentansprüche

1. Eine Wasserstoff-Sauerstoff Brennstoffzelle, die Folgendes aufweist:
einen Elektrolyten (1) sandwichartig zwischen zwei Katalysatorschichten oder Flächenelementen (21; 31), wobei jede Katalysatorschicht oder jedes Katalysatorflächenelement in Kontakt mit einer für Gas permeablen und aus leitendem Material bestehenden Elektrode (27; 33) steht, wobei eine oder mehrere der Elektrodenschichten oder Elektrodenflächenelemente (22, 24; 33) innerhalb einer oder mehrerer der Katalysatorschichten oder Flächenelemente (21, 23, 25; 31, 35) angeordnet ist bzw. sind.

2. Die Brennstoffzelle nach Anspruch 1, die Folgendes aufweist:
abwechselnd Katalysatorschichten (21, 23, 25) und Elektrodenschichten (22, 24), wobei die Elektrodenschichten miteinander verbunden sind.

3. Die Brennstoffzelle nach Anspruch 1, wobei die Elektrode (33) schlangenförmig durch die Katalysatormasse (31, 35) mit einer gewellten oder rippenförmigen Gestalt verläuft.

4. Die Brennstoffzelle nach einem der Ansprüche 1 bis 3, wobei die für Gas permeable Elektrodenschicht eine Schicht aus leitendem Material ist mit einer Dicke, die kleiner ist als 1 µm, vorzugsweise in der Größenordnung von 0,2 bis 0,6 µm.

5. Die Brennstoffzelle nach einem der Ansprüche 1 bis 3, wobei die für Gas permeable(n) Elektrodenschicht(en) ein Gitter ist oder mehrere Gitter sind, und zwar aus einem leitenden Material.

6. Die Brennstoffzelle nach Anspruch 4 oder 5, wobei das leitende Material Gold ist.
